# EUROPÄISCHE PATENTANMELDUNG

(11) **EP 2 103 468 A1**
(43) Veröffentlichungstag der Anmeldung: **23.09.2009**
(21) Anmeldenummer: 08005053.7
(22) Anmeldetag: 18.03.2008
(51) Int. Cl.: B60J 7/22

(54) **Öffnungsfähiges Fahrzeugdach**

(71) Anmelder: ArvinMeritor GmbH, 63128 Dietzenbach (DE)
(72) Erfinder: Grimm, Rainer, 60598 Frankfurt (DE)
(74) Vertreter: Prinz & Partner

(57) **Zusammenfassung**

Ein öffnungsfähiges Fahrzeugdach mit einer Dachöffnung und einem verfahrbaren Deckel weist einen Windabweiser (22) auf, der an einer feststehenden, unter dem Öffnungsrand (16) liegenden Achse (24) schwenkbar angebracht ist. Auch die Windabweisermechanik, die mit dem Verfahrmechanik des Deckels (14) koppelbar ist, liegt unter dem Öffnungsrand (16).

## Beschreibung

Die Erfindung betrifft ein öffnungsfähiges Fahrzeugdach, mit einer Dachöffnung, die durch einen verfahrbaren Deckel wahlweise geöffnet und geschlossen werden kann, wobei die Dachöffnung von einem Öffnungsrand des Daches begrenzt ist, und einem Windabweiser, der im geöffneten Zustand des Deckels hinter dem vorderen Öffnungsrand nach oben vorsteht, wobei der Windabweiser federnd angestellt ist.

Ein gattungsgemäßes Fahrzeugdach ist aus der DE 25 05 736 A1 bekannt. Dieses Fahrzeugdach weist eine Art Wippe unterhalb des vorderen Öffnungsrandes auf, auf der wiederum eine Schwenkachse für den Windabweiser sitzt. Die Wippe ist von einem federbelasteten Hebel betätigbar. Dieser Hebel wiederum kann von einem Fortsatz des Deckels überfahren werden, wodurch eine Schwenkbewegung nach unten eingeleitet wird. Der auf der Wippe sitzende Windabweiser ist über eine weitere Federmechanik beweglich und schwenkt, sobald der Deckel zurückgefahren wird, nach hinten. Gleichzeitig wird die Wippe über den federnd angestellten Hebel nach oben geschwenkt, wodurch der Windabweiser über den Öffnungsrand nach oben ausgestellt wird.

Die Erfindung betrifft ausschließlich solche Fahrzeugdächer, bei denen die Windabweiser im geschlossenen Zustand des Daches unterhalb der Dachhaut liegen und anschließend, beim Öffnen, über den Vorderrand hinaustreten.

Aufgabe der Erfindung ist es, ein einfacher aufgebautes Dach zu schaffen.

Dies wird bei einem Dach der eingangs genannten Art dadurch erreicht, daß der Windabweiser um eine feststehende, in ausgeschwenkter Stellung des Windabweisers und in Draufsicht gesehen, vollständig unterhalb des vorderen Öffnungsrandes liegende Achse verschwenkbar ist und daß das Einschwenken in die eingefahrene Stellung durch eine in Draufsicht unterhalb des Öffnungsrandes liegende Windabweisermechanik erfolgt, die mit der Verfahrmechanik des Deckels gekoppelt oder koppelbar ist.

Beim erfindungsgemäßen Fahrzeugdach ist eine Schwenkachse vorgesehen und nicht mehrere aufeinander stehende, so daß sich mehrere Schwenkbewegungen nicht überlagern müssen. Das bedeutet, der Windabweiser selbst ist unmittelbar an einer feststehenden Achse angelenkt und nicht etwa auf einer Wippe oder einem anderen Hebel sitzenden Achse. Dies vereinfacht die Bewegungsabläufe und die gesamte Mechanik, die damit robuster wird. Darüber hinaus liegt auch die Windabweisermechanik, über die der Windabweiser eingeschwenkt wird, wenn sich der Deckel schließt, unterhalb des Öffnungsrandes. Damit ist bei geöffnetem Fahrzeugdach die Fahrzeugöffnung einerseits nicht beengt, und andererseits ist sie für den Insassen mehr oder weniger nicht sichtbar, was den ästhetischen Gesamteindruck verbessert. Die Einschwenkbewegung wird von der Verfahrmechanik des Deckels abgeleitet, so daß kein eigener Antrieb notwendig ist und sozusagen eine Zwangskoppelung vorliegt. Wenn das Dach geschlossen wird, wird zwangsläufig der Windabweiser wieder nach unten geschwenkt.

Die Windabweisermechanik, also die an den Windabweiser gekoppelten und zu ihm beweglichen Teile sind vorzugsweise als Gestänge ausgebildet. Ein Gestänge ist stabil und einfach herzustellen.

Vorzugsweise ist das Gestänge im ausgeschwenkten Zustand des Windabweisers vollständig von der Verfahrmechanik des Deckels entkoppelt.

Die Verfahrmechanik fährt vorzugsweise beim Zufahren des Deckels in die Schließstellung gegen das Gestänge und verschiebt dieses, um die Einschwenkbewegung hervorzurufen.

Eine sehr einfache Ausführungsform wird dadurch erreicht, daß das Gestänge einen im ausgeschwenkten Zustand des Windabweisers vertikal (d.h. im wesentlichen vertikal) stehenden Hebel und ein mit diesem gekoppeltes Druckelement aufweist, das mit dem Windabweiser verbunden ist. Es sind somit sehr wenige Teile erforderlich, um die gesamten Bewegungen des Windabweisers zu gewährleisten.

Natürlich sollte die gesamte Schwenkmechanik nicht einseitig an einem Seitenrand vorgesehen sein, sondern symmetrisch auf beiden Seitenrändern und somit an beiden seitlichen Enden des Windabweisers vorhanden sein.

Der zuvor erwähnte Hebel kann in Fahrzeugrichtung gesehen seitlich abgekantet sein, wobei in einer Abkantung das Druckelement liegt. Durch dieses Abkanten läßt sich der Hebel den angrenzenden Bauteilen besser anpassen, was seitlich Platz spart, und zudem kann das Druckelement in einer solchen Abkantung liegen, was nochmals Platzprobleme verringert.

Die bevorzugte Ausführungsform sieht vor, daß eine Kulisse des Deckels beim Schließen des Deckels aus der Offenstellung gegen die Windabweisermechanik stößt und diese verschiebt. Diese Kulisse kann ein feststehendes, d.h. nicht verschwenkbares Teil sein, welches starr mit dem Deckel gekoppelt ist. Darüber hinaus sind natürlich auch andere mit dem Deckel gekoppelte oder koppelbare Teile denkbar, die entweder nur die Bewegung des Deckels mitmachen oder eine Relativbewegung zu diesem ausführen.

Die Kulisse kann einen seitlich vorstehenden Anschlag besitzen, an dem sie gegen die Windabweisermechanik, vorzugsweise gegen den zuvor erwähnten Hebel, stößt.

Die Verfahrmechanik kann unter den Hebel fahren und diesen verschwenken, wobei in der eingefahrenen Stellung des Windabweisers der Hebel dann von oben gegen die Verfahrmechanik gedrückt und in einer verschwenkten Stellung gehalten wird.

Die Windabweisermechanik sollte seitlich außerhalb der Kulisse des Deckels, d. h. näher in Richtung Fahrzeugaußenseite, untergebracht sein und damit an einem vor Schmutz relativ geschützten Ort.

Vorzugsweise fährt ausschließlich die Ausstellfeder den Windabweiser in die ausgeschwenkte Stellung, d.h. es ist ansonsten kein Antrieb zum Ausfahren erforderlich. Natürlich sollten an beiden Enden des Windabweisers jeweils eine Ausstellfeder vorgesehen sein, um kein Verkanten des Windabweisers hervorzurufen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Draufsicht auf ein erfindungsgemäßes öffnungsfähiges Fahrzeugdach,
- Figur 2 eine Längsschnittansicht durch das Fahrzeugdach längs der Linie II-II in Fig. 1 im Bereich des vorderen Öffnungsrandes bei geschlossenem Deckel,
- Figur 3 eine entsprechende Schnittansicht durch das erfindungsgemäße Dach bei abgesenktem Deckel,
- Figur 4 eine Schnittansicht durch das Fahrzeugdach in Lüfterstellung,
- Figur 5 eine Schnittansicht durch das Fahrzeugdach bei nahezu oder vollständiger Öffnung des Daches, und
- Figur 6 eine Querschnittsansicht durch das Fahrzeugdach im Bereich eines seitlichen Öffnungsrandes.

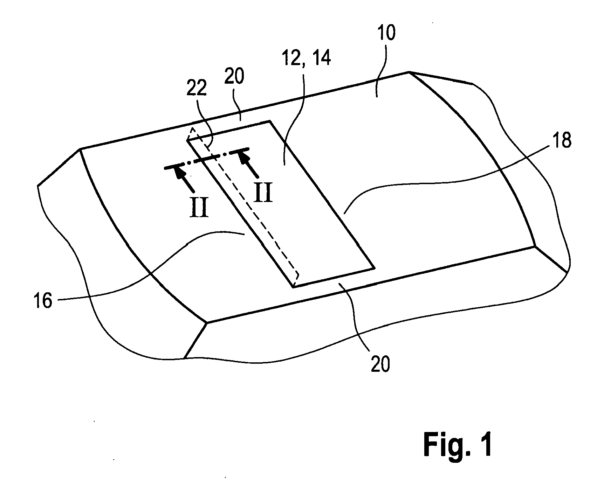

In Figur 1 ist ein öffnungsfähiges Fahrzeugdach 10 dargestellt, welches eine Dachöffnung 12 besitzt, die durch einen ausstellbaren und verfahrbaren Deckel 14 wahlweise geöffnet und geschlossen werden kann. Die Dachöffnung 12 wird von einem umlaufenden Öffnungsrand begrenzt, der aus einem vorderen, quer zur Fahrzeugrichtung verlaufenden Öffnungsrand 16, einem hinteren Öffnungsrand 18 und seitlichen Öffnungsrändern 20 besteht.

Der Deckel 14 wird beim Zurückfahren entweder über das Dach oder unter das Dach verfahren, wobei letzteres üblicher ist. Um die Geräusche und vor allem die Luftströmung im Inneren des Fahrzeugs zu optimieren, wird beim Ausfahren des Deckels 14 ein Windabweiser 22 über den Öffnungsrand 16 und unmittelbar an diesen angrenzend nach oben geschwenkt. Der Windabweiser 22 erstreckt sich vorzugsweise über die gesamte Breite der Öffnung 12.

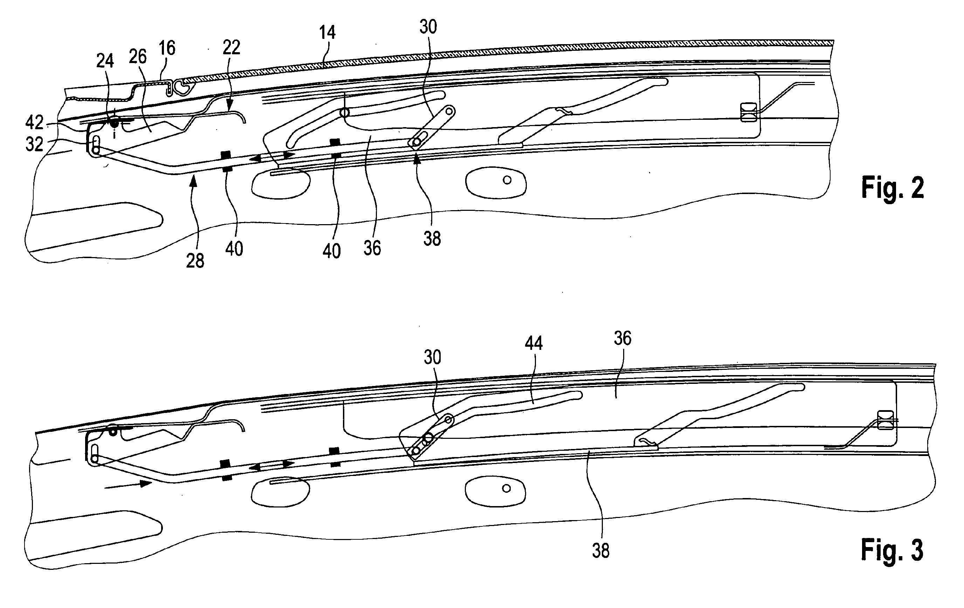

In Figur 2 ist der Aufbau der Windabweisermechanik und des Windabweisers selbst zu erkennen. Der Windabweiser 22, auch Windabweiserblatt genannt, ist schwenkbar an einer feststehenden, d. h. raumfesten Achse 24 angebracht. Die Achse 24 liegt zu jeder Zeit, d.h. auch in der ausgeschwenkten Stellung des Windabweisers 22 unterhalb des vorderen Öffnungsrandes 16, d.h. sie ist von oben nicht zu sehen. Der Windabweiser 22 besteht aus verschiedenen Abschnitten, nämlich dem quer zur Fahrzeugrichtung verlaufenden, durchgehenden Abschnitt sowie zwei Armen 26, die an den seitlichen Rändern des Windabweisers 22 vorhanden sind und sich zu der jeweiligen Achse 24 erstrecken. Der Windabweiser 22 bildet so einen zweiarmigen Hebel.

Am unteren Teil des Hebels setzt die Windabweisermechanik an.

Im vorliegenden Fall umfaßt die Windabweisermechanik pro Seite nur sehr wenig Teile, nämlich ein Druckelement 28 in Form vorzugsweise einer Stange sowie einen mit dem Druckelement 28 schwenkbar gekoppelten Hebel 30, insbesondere einen einarmigen Hebel. Der Windabweiser 22 ist schwenkbar mit dem Druckelement 28 gekoppelt, nämlich über ein kurzes Langloch 32.

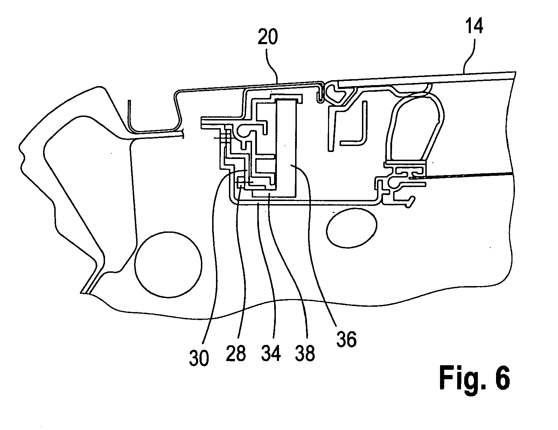

Der Hebel 30 ist, wie Figur 6 zu entnehmen ist, schwenkbar am Rahmen 34 des Daches unmittelbar angebracht.

Figur 6 kann man auch entnehmen, daß der Hebel 30 mehrfach abgekantet ist und in einer Abkantung das Druckelement 28 sitzt.

Die Windabweisermechanik ist seitlich außerhalb einer Kulisse 36 der sogenannten Verfahrmechanik des Deckels 14 angeordnet. Die Kulisse 36 hat am unteren Ende einen seitlich in Richtung Hebel 30 vorstehenden Anschlag 38, der, wie Figur 2 zeigt, fast über den gesamten unteren Rand der Kulisse 36 verläuft.

Der Hebel 30 hat in diesem Bereich auch eine Abkantung, mit deren Unterseite er auf der Oberseite des Anschlags 38 anliegt, und zwar in allen Zuständen bis auf den ausgeschwenkten Zustand des Windabweisers 22.

Wie in Figur 2 ferner zu erkennen ist, ist das Druckelement 28 am Rahmen 34 über Führungen in Längsrichtung verschiebbar gelagert.

Darüber hinaus ist noch zu erwähnen, daß am Windabweiser 22 unmittelbar eine Feder 42, hier eine Schenkelfeder angreift, die bestrebt ist, den Windabweiser 22 in seine ausgeschwenkte Stellung zu drücken.

In der in Figur 2 dargestellten Position ist der Deckel geschlossen, der Windabweiser 22 ist nach unten geschwenkt, und der Hebel 30 liegt auf dem Anschlag 38 an. Da die federnde Anstellung des Windabweisers 22 bestrebt ist, diesen nach oben zu drücken, ist auch das Druckelement 28 bestrebt, nach rechts verschoben zu werden, um den Hebel 30 entgegen dem Uhrzeigersinn zu schwenken. Da der Hebel 30 aber auf dem Anschlag 38 anliegt, hält dieser die Windabweisermechanik in der dargestellten Position.

In Figur 3 sind zur Vereinfachung der Deckel 14 und der Öffnungsrand 16 weggelassen worden. Bei der Ausführungsform nach Figur 3 ist der Deckel 14 nach unten abgesenkt, um ihn nach hinten unter die Dachhaut fahren zu können. Die Kulisse 36 mit ihrer Kulissenführung 44, die unter anderem für die Vertikalbewegung des Deckels 14 zuständig ist, ist in dieser Stellung nach hinten gefahren. Noch liegt jedoch der Hebel 30 am Anschlag 38 an.

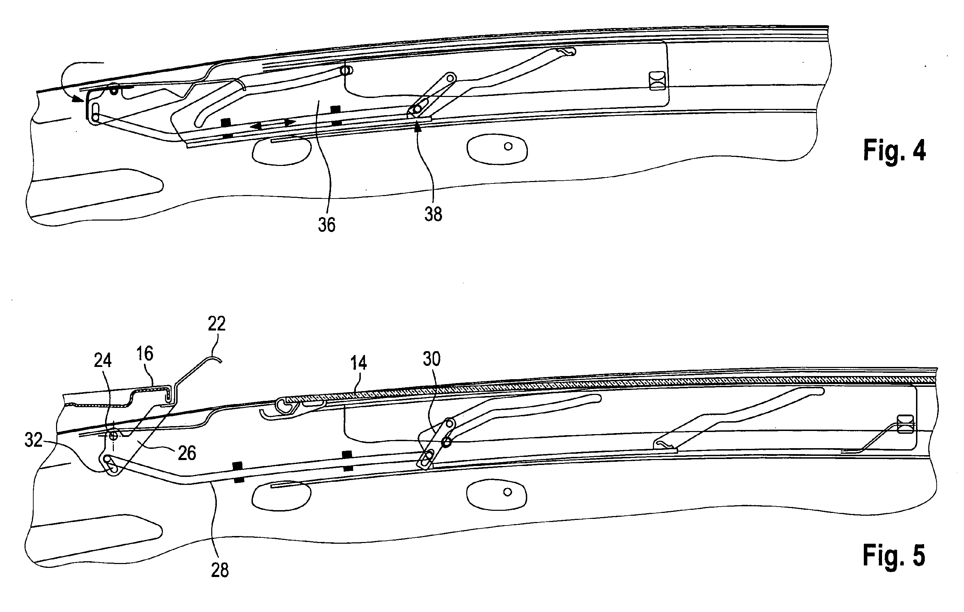

Bei der in Figur 4 gezeigten Stellung ist die Kulisse 36 sehr weit nach vorne gefahren, denn der Deckel (hier weggelassen) ist in der sogenannten Lüfterstellung, also in der ausgestellten Stellung, bei der der hintere Rand nach oben geschwenkt wurde. Auch in dieser Stellung liegt der Hebel 30 noch am Anschlag 38 an, jedoch an dessen äußeren hinteren Ende.

Wenn der Deckel zum kompletten Öffnen noch weiter nach hinten verfahren wird (siehe Figur 5), fährt der Anschlag 38 unter dem Hebel 30 weg, so daß dieser gegen den Uhrzeigersinn verschwenkt werden kann, aufgrund der Feder 42, die in Figur 5 nicht dargestellt ist. Der Windabweiser 22 schwenkt also in die in Figur 5 dargestellte ausgestellte Stellung.

Wird der Deckel wieder nach links in die Schließstellung verfahren, stößt der Anschlag 38 wieder gegen den Hebel 30 und schwenkt diesen im Uhrzeigersinn, so daß er letztlich wieder auf ihm aufsitzt.

Wie dargestellt ist das Windabweisergestänge in der ausgeschwenkten Stellung des Windabweisers 22 von der sogenannten Verfahrmechanik des Deckels, im vorliegenden Fall von der Kulisse 36, entkoppelt.

Im vollständig geöffneten Zustand des Deckels 14 steht der Hebel 30 im wesentlichen vertikal.

### Zu betonen ist noch folgendes:

Der Windabweiser 22 wird ausschließlich über die zwei im Bereich der Achse 24 angreifenden Feder 42 verschwenkt, der auch für die Position der Windabweisermechanik verantwortlich ist.

Sowohl die Windabweisermechanik als auch die Achse 24 liegen im geöffneten Zustand des Daches in der Draufsicht gesehen unterhalb des Öffnungsrandes, sind von oben also nicht zu erkennen und schränken die Öffnung 12 deshalb nicht ein. Gemäß der bevorzugten Ausführungsform liegen sogar die Arme 26 unterhalb des Öffnungsrandes 16 und die Druckelemente 28 unter den Öffnungsrändern 20 und zum Teil 16.

## Patentansprüche

1. Öffnungsfähiges Fahrzeugdach, mit einer Dachöffnung (12), die durch einen verfahrbaren Deckel (14) wahlweise geöffnet und geschlossen werden kann, wobei die Dachöffnung (12) von einem Öffnungsrand (16, 18, 20) des Deckels begrenzt ist, und einem Windabweiser (22), der in geöffnetem Zustand des Daches hinter dem vorderen Öffnungsrand (16) nach oben hervortritt, wobei der Windabweiser (22) federnd angestellt ist, **dadurch gekennzeichnet, daß** der Windabweiser (22) um eine feststehende, in der ausgeschwenkten Stellung des Windabweisers (22) in Draufsicht gesehen vollständig unterhalb des vorderen Öffnungsrandes (16) liegende Achse (24) verschwenkbar ist und daß das Einschwenken in die eingefahrene Stellung durch eine in Draufsicht unterhalb des Öffnungsrandes (16, 18, 20) liegende Windabweisermechanik erfolgt, die mit der Verfahrmechanik des Deckels (14) gekoppelt oder koppelbar ist.

2. Fahrzeugdach nach Anspruch 1, **dadurch gekennzeichnet, daß** die Windabweisermechanik ein Gestänge ist.

3. Fahrzeugdach nach Anspruch 2, **dadurch gekennzeichnet, daß** das Gestänge in ausgeschwenktem Zustand des Windabweisers (22) vollständig von der Verfahrmechanik entkoppelt ist.

4. Fahrzeugdach nach Anspruch 2 oder 3, **dadurch gekennzeichnet, daß** die Verfahrmechanik beim Schließen der Dachöffnung (12) gegen das Gestänge fährt und dieses verschiebt, um die Einschwenkbewegung hervorzurufen.

5. Fahrzeugdach nach einem der Ansprüche 2 bis 4, **dadurch gekennzeichnet, daß** das Gestänge einen im ausgeschwenkten Zustand des Windabweisers (22) vertikal stehenden Hebel (30) und ein mit diesem gekoppeltes Druckelement (28) aufweist, das mit dem Windabweiser (22) verbunden ist.

6. Fahrzeugdach nach Anspruch 5, **dadurch gekennzeichnet, daß** der Hebel (30) in Fahrzeugrichtung gesehen seitlich abgekantet ist und in einer Abkantung das Druckelement (28) liegt.

7. Fahrzeugdach nach einem der vorhergehenden Ansprüche, **dadurch gekennzeichnet, daß** die Verfahrmechanik eine Kulisse (36) aufweist, die beim Schließen des Deckels (14) gegen die Windabweisermechanik stößt und diese verschiebt.

8. Fahrzeugdach nach Anspruch 7, **dadurch gekennzeichnet, daß** die Kulisse (36) einen seitlich vorstehenden Anschlag (38) besitzt, mit dem sie gegen die Windabweisermechanik stößt.

9. Fahrzeugdach nach einem der vorhergehenden Ansprüche, **dadurch gekennzeichnet, daß** die Verfahrmechanik einen Hebel (30) der Windabweisermechanik verschwenkt.

10. Fahrzeugdach nach Anspruch 9, **dadurch gekennzeichnet, daß** die Verfahrmechanik den Hebel (30) der Windabweisermechanik verschwenkt und in der eingeschwenkten Stellung des Windabweisers (22) der Hebel (30) von oben gegen die Verfahrmechanik drückt und in der verschwenkten Stellung gehalten wird.

11. Fahrzeugdach nach einem der vorhergehenden Ansprüche, **dadurch gekennzeichnet, daß** die Windabweisermechanik seitlich außerhalb der Verfahrmechanik des Deckels, insbesondere einer Kulisse (36) des Deckels (14) liegt.

12. Fahrzeugdach nach einem der vorhergehenden Ansprüche, **dadurch gekennzeichnet, daß** der Windabweiser (22) ausschließlich über unmittelbar mit ihm gekoppelte Federn (42) in die ausgeschwenkte Stellung gebracht wird.
